# EUROPEAN PATENT APPLICATION

(11) **EP 4 272 543 A1**
(43) Date of publication of application: **08.11.2023**
(21) Application number: 22171159.1
(22) Date of filing: 02.05.2022
(51) Int. Cl.: A01G 3/04, A01G 17/06

(54) **MOVING UNIT FOR TRANSPORT OF BRANCHES OF PLANTS IN AN IN-LINE CULTIVATION**

(71) Applicant: Yanmar Holdings Co., Ltd., Osaka-shi, Osaka 530-8311 (JP)
(72) Inventor: PEZZOLA, Lorenzo, Firenze (IT); Mussi, Roberto, Firenze (IT)
(74) Representative: Dennemeyer & Associates S.A.

(57) **Abstract**

Moving unit (4) attachable to a supporting structure (8) used for the cultivation of plants in a cultivating area, in particular for the cultivation of climbing plants, wherein the supporting structure (8) comprises a plurality of pillars (2) positionable on the ground (G) of said cultivating area and at least a fixed structure (3) fixable between at least a first pillar and a second pillar for supporting at least in part a main body (5) of the plants, the moving unit (4) comprising at least a transporting structure (9), on which branches (6) of the plants are attachable, the transporting structure (9) being movable relative to the supporting structure (8), in particular being configured to translate parallel to the ground (G), for transporting branches (6) of the plants from an originating point to a collecting point, when the branches (6) are cut from the main body (5).

## Description

The present disclosure relates to a moving unit couplable to a supporting structure used for the cultivation of plants in a cultivating area and to a farming apparatus comprising said moving unit. Also, the disclosure relates to a method for retrofitting a supporting structure used for the cultivation of plants in a cultivating area.

The removal and collection of pruned branches (for example from vine or other type of climbing crops) is one of the most time and labor consuming operation that should be done every year by farmers. The removal and/or handling of these branches from the field are non-avoidable operations. Removal and handling operations can have major impacts on the cultivation, e.g. by improving the quality and/or the yield, improving phytosanitary conditions of the field, and enhancing the overall health conditions of the crops.

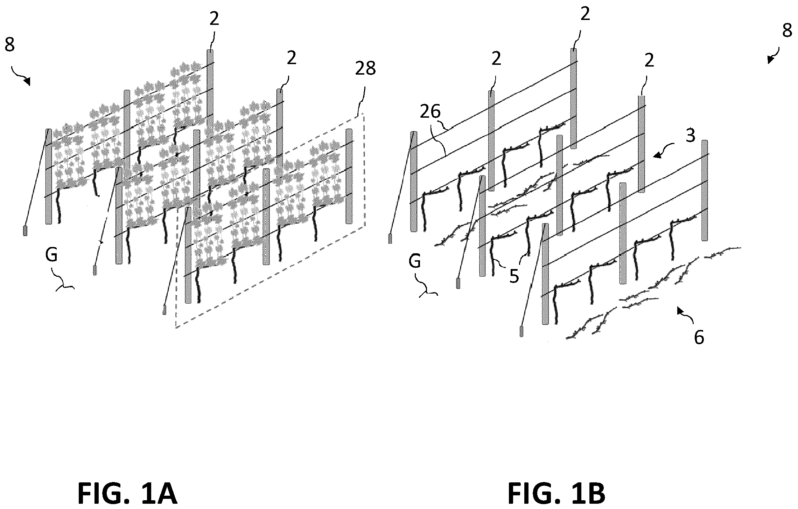

Figures 1A-1B show an example of a traditional vine cultivation layout (in the example spurred cordon breeding system) during the spring/summer period, the leaves being present on the crops (Fig. 1A), and during the fall/winter period, the leaves having fallen off the branches (Fig.1B). Vine cultivation is mostly organized into lines 28 spaced apart (e.g. from 0.5 to 2.5 meters). The lines 28 are composed by a plurality of pillars 2 (usually made of metal or wood) fixed on the ground G of the cultivation area and metal wires 26 extending horizontally parallel to the ground G that are attached to the pillars 2 and have the task to support the vine main body 5 and branches 6. The pillars 2 and the wires 26 form a supporting structure 8.

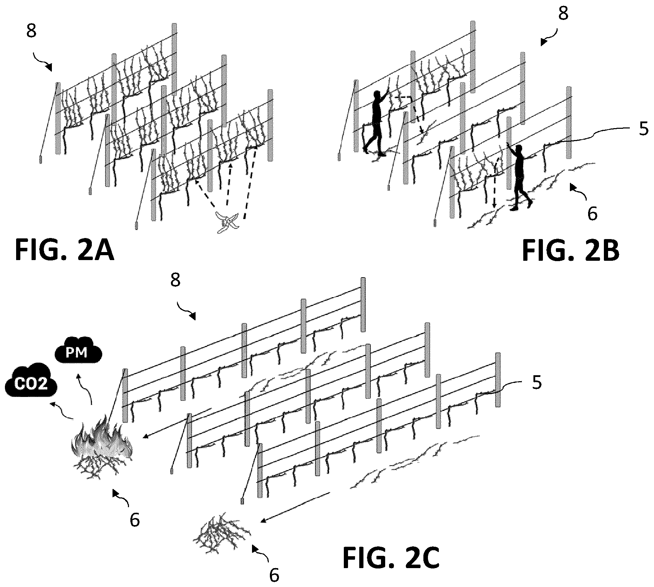

The activity of pruning branches takes place during the winter season. The traditional methodology for pruning removal and collection usually consists of a manual removal of the branches 6 from the plants. The branches 6 are then thrown to the ground G in the space between the lines 28 (Fig. 1B). Figures 2A and 2B illustrate that the branches 6 are usually manually cut by farmers. The branches 6 are then collected into groups located in empty areas on field's side and are seasoned on field by a natural drying effect operated by sun and wind exposition. The branches 6 can then be burnt on site (Fig. 2C).

However, this traditional methodology is not environmentally sustainable. As a matter of fact, the uncontrolled combustion of branches 6 has a great impact on air quality and GHG (Green House Gases) production. For this reason, the traditional methodology is prohibited in many countries and new solutions are under development in order to valorize the pruning and decrease the environmental impact.

As an alternative procedure, the branches 6 can be seasoned along the lines on the ground G and, after some months, these can be shredded during grass shredding operations. This solution can be advantageous in terms of cost saving but it is not efficient in terms of GHG gas emissions since biomass natural degradation takes place and, consequently, GHG gases are released. In addition, this procedure does not valorize the biomass energy since no energetic benefit can be obtained for the farmer.

It is therefore an object of the invention to obtain an efficient system for collecting pruned branches that is environmental friendly, cost-effective, and configured to reduce the manual labor of the farmers and to valorize the biomass energy of the pruning.

The object is solved by a moving unit couplable to a supporting structure used for the cultivation of plants in a cultivating area, in particular for the cultivation of climbing plants, wherein the supporting structure comprises a plurality of pillars positionable on the ground of said cultivating area and at least a fixed structure fixable to at least a pillar for supporting at least in part a main body of the plants, the moving unit comprising at least a transporting structure, on which branches of the plants are attachable, the transporting structure being movable relative to the supporting structure, in particular being configured to translate parallel to the ground, for transporting branches of the plants from an originating point to a collecting point, when the branches are cut from the main body.

According to another aspect, there is provided a farming apparatus for the cultivation of plants in a cultivating area, in particular for the cultivation of climbing plants, the apparatus comprising a plurality of pillars positionable on the ground of said cultivating area;
a supporting unit fixable to at least one pillar for supporting at least in part a main body of the plants; and
at least a moving unit as defined above, the moving unit being movable relative to the supporting unit and to said pillars, in particular being configured to translate parallel to the ground, for transporting branches of the plants, when the branches are cut from the main body.

In an additional aspect, there is provided a method for retrofitting a supporting structure used for the cultivation of plants in a cultivating area, in particular for the cultivation of climbing plants, wherein the supporting structure comprises a plurality of pillars positionable on the ground of said cultivating area and at least a fixed structure fixable to at least a pillar for supporting at least in part a main body of the plants. The method comprises providing the moving unit as defined above, and coupling said moving unit to the supporting structure such that the transporting structure is movable relative to the supporting structure, in particular is configured to translate parallel to the ground, for transporting branches of the plants from an originating point to a collecting point, when the branches are cut from the main body.

Other aspects and features are defined in the appended claims.

Advantageously, the present invention can be installed to all those locations where mechanization is hardly feasible such as high density cultivations (e.g. vine in Champagne area) or difficult orographic conditions (i.e. cultivation located in mountain location).

Also, with the present invention is possible to decrease the operation costs. The efficient biomass movement can imply a lower cost of biomass wastes management with the consequence of an increased economic sustainability of the waste biomass valorisation trough energy system.

It is noted that the present invention doesn't imply any major change in cultivation technique. The structure is designed to be similar the one that is traditionally used on field. As a consequence, when the moving unit is not operative (e.g. in spring- summer season), no changes are introduced for the plant and for the operators. Also, traditional structures can be retrofitted or adapted to the functions of the present invention by bringing few simple changes.

With the term "couplable" is intended that the moving unit according to the invention can be attached to, jointed with, connected to, fixed in a removable way to, or simply positioned close to, the supporting structure (with or without a direct contact) in order to determine an interaction with said supporting structure. In the latter case, it is possible to consider two different layouts of the support structure during different seasons: In the winter- early spring season, when the plants have no branches, the support structure can consist only in a single support line for the main plant body while, during the spring-summer season, the support structure might combine with the moving structure to support the branches.

Examples of the disclosure will now be described by way of example only with reference to the accompanying drawings, in which like references refer to like parts, and in which:
Figures 1A-1B show prior art vine cultivations in different seasons;
Figures 2A-2C show prior collection and treatment of pruned branches;
Figures 3A-3D show the moving unit applied to a supporting structure according to an example;
Figures 4A-4B show a top view and a side view of the farming apparatus according to an example;
Figures 5A-5B show a top view and a side view of the driving unit coupled to the treatment unit according to two examples;
Figures 6A-6D show a top view and a side view of the moving unit according to two examples;
Figures 7A-7D show the farming apparatus according to different examples; and
Figures 8A-8D show a schematic representation of the protruding elements provided on the transporting structure according to two examples.
Figure 9A-9B show a retrofitting technique according to an the example (Fig. 9A) and the junction and interconnection points according to different layouts of an example (Fig. 9B).

A moving unit, a farming apparatus and a retrofitting method of a supporting structure used for the cultivation of plants in a cultivating area are disclosed. In the following description, a number of specific details are presented in order to provide a thorough understanding of the examples of the disclosure. It will be apparent however to a person skilled in the art that these specific details need not be employed in order to practice the examples of the disclosure. Conversely, specific details known to the person skilled in the art are omitted for the purposes of clarity in presenting the examples.

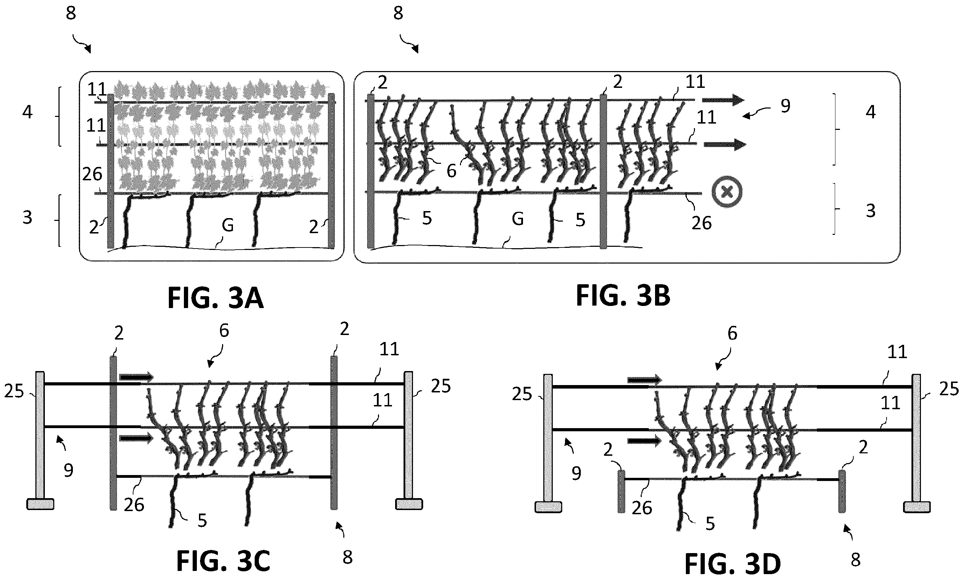

Figures 3A and 3B illustrate the application of the moving unit 4 to a supporting structure 8. The supporting structure 8 is used for the cultivation of plants, in this case of vine, and comprises a plurality of pillars 2 positioned on the ground G of the cultivating area and at least a wire 26, for example made of metal, fixed to the pillars 2 and extending parallel to the ground G. Figures 3A and 3B show the presence of a single fixed wire 26 located at the lowest part of the supporting structure 8, this fixed wire 26 representing a fixed structure 3 of the supporting structure 8. The pillars 2 are placed on the ground G. Preferably, the pillars 2 are inserted in the ground G. However, the pillars 2 can be provided with a base element placed on the ground G, this base element allowing each pillar 2 to remain in the vertical position. It is noted that the fixed structure 3 serves to support the main body 5,or main branch ortrunk, of the plants. The main body is intended as the part of the plant that is not removed during pruning phase.

The moving unit 4 comprises at least a transporting structure 9 having at least one wire-shaped element 11 extending parallel to the ground G. According to the figures, the transposing structure 9 is represented by two wire-shaped elements 11 extending parallel to the ground G and therefore to the fixed wire 26. Each wire-shaped element 11 is attachable to, and detachable from, at least one of the plurality of pillars 2. In this way, the transporting structure 9 and therefore the moving unit 4 can easily be applied to the pillars 2 of a standard supporting unit 8, when needed. Alternatively or additionally, the wire-shaped element 11 is attachable to, and detachable from, at least a support element 25 placeable on the ground G of the cultivating area. This is shown in figure 3C. In this way, the wire-shaped elements 11 of the transporting structure 9 are not attached to the pillars 2 of the supporting structure 8 but are attached to two supporting elements 25 and can easily be applied to a standard supporting structure 8, when needed. Advantageously, the supporting elements 25 are not needed to be inserted in the ground G since they can be provided with a base that is placeable on the ground G. Based on the utilization of the moving unit 4 and supporting structure 8, the pillars 2 can have a different length.

An alternative configuration is shown in figure 3D. Similarly to the configuration of figure 3C, this could be a possible solution for retrofitting the technology to existing cultivations. In this case, the wire- shaped elements 11 of the transporting structure 8 are attached to two supporting elements 25 and can be easily installed during the spring-summer season, when the branches development requires a higher support layer. Also in this case, the supporting elements 25 are not needed to be permanently inserted into the ground G and can be removed from the field when their tasks are completed.

The transporting structure 9 is movable relative to the supporting structure 8. In particular, the transporting structure 9, and therefore the wire-shaped elements 11, can translate parallel to the ground G. On the other hand, the fixed structure 3 and in particular the fixed wire 26 does not move and remains fixed to the supporting structure 8.

The application of the present moving unit 4 leads to an innovative cultivation structure and handling system that can be applied to vine crops or others crops that are cultivated in-line. The cultivation methodology is not modified and no changes in agronomic procedures should be required to the farmer.

The moving unit 4 is basically used in a particular period of the year, i.e., during the fall, when the leaves have fallen off the branches 6 (Fig. 3B). During the manual pruning phase, the operator cuts the branches 6 at their base and then leaves them attached to the wire-shaped elements 11. The branches 6 are left connected with the wire-shaped elements 11 in order to be naturally dried by sun and wind exposition.

The aim of the present moving unit 4 is to avoid branches removal (manual or mechanical) and avoid transport of the pruning from the space between the lines. After the manual cut operations, the cut branches 6 can lay on the wire-shaped elements 11 for a limited amount of time (in the example from 3 to 10 weeks) before the next operation will be done in the field (for example: pesticide spraying). During this time span, the branches 6 can naturally dry thanks to the raised position that is above the ground level G, thereby having a natural good exposition to sun and wind. The drying of branches 6 keeps the good phytosanitary condition of the field. Drying is optional, in case the farmer need quick removal of the branches 6 it is possible to remove the wet branches 6.

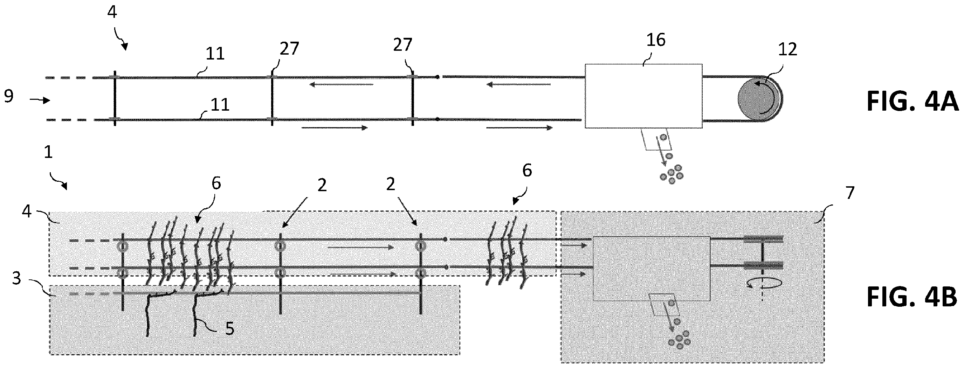

At this point, the branches 6 can be moved and transported to a collecting point that can be located in a dedicated space nearby the field by using a group of translating wires 11. Figures 4A and 4B show a top view (Fig. 4A) and a side view (Fig. 4B) of the farming apparatus 1. The apparatus 1 comprises a plurality of pillars 2 positionable on the ground G of the cultivating area, a fixed structure 3 fixable to at least one pillar 2 for supporting a main body 5 of the plants, and a moving unit 4. The moving unit 4 is movable relative to the fixed structure 3 and to the pillars 2.

In one example, the apparatus 1 comprises a collecting unit 7 for collecting the branches 6 transported by the moving unit 4.

In another example, the apparatus 1 comprises a treatment unit 16 for separating the branches 6 transported by the moving unit 4 from the transporting structure 9 and in particular for separating the branches from the wire-shaped elements 11. In addition to the separation, the scope of the treatment unit 16 is to treat the collected branches 6 in order to simplify their management. The treatment operation can consist in branches chipping or densification (such as briquetting or pelleting) or baling or others. The treatment unit 16 can be integrated with a biomass (treated branches) management and storage facility to be located nearby the field.

According to a further example, the moving unit 4 and therefore the apparatus 1 including said moving unit 4, can comprise at least one or more pulleys 12 coupled to the transporting structure 9 and in particular to the wire-shaped elements 11. As shown in the figures 4A and 4B, the pulley 12 can be located at a side of the apparatus 1 for allowing the movement and change of direction of the wire-shaped elements 11. From figure 4A it is noted that the wire-shaped wires 11 in one direction and in the opposite direction can be connected through dedicated connection elements 27. Each wire-shaped element 11 can be provided with a corresponding pulley 12. The pulley 12 can be part of the collecting unit 7 coupled to the moving unit 4 (as shown in figure 4B) or can be directly coupled to the moving unit 4, the pulley being part of the transporting structure 9.

In examples, the moving unit 4 can comprise a driving unit 10 connectable to one end of the transporting structure 9 for causing the movement of said transporting structure 9. In particular, the driving unit 10 can comprise at least an electric motor, and/or at least a movable mechanical driver, and/or at least a standalone mechanical driver.

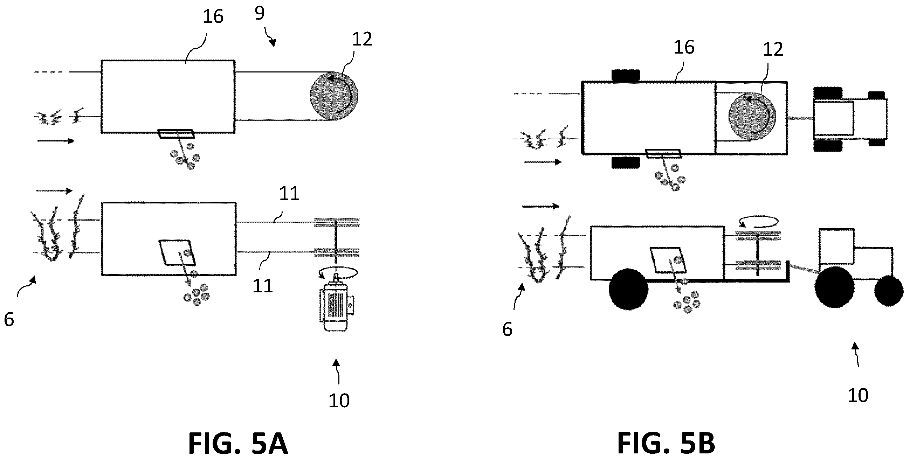

As shown in figures 5A and 5B, the mechanical power to the wire-shaped elements 11 of the transporting structure 9 is transmitted to the moving unit 4 by a main transmission system (in the example main pulleys 12) that can be activated by an electric motor (Fig. 5A) or others mechanical systems such as tractor PTO (Fig. 5B). The main transmission system is located in a designated place nearby the field and can be coupled with the treatment unit 16. Alternatively, it can be dislocated on field and can be composed by one or more motors. Figures 5A and 5B show each the top view (on the top) and the side view (on the bottom) of the main transmission system.

In order to drive the movement of the wire-shaped elements 11 across the field, a movement driver is needed. The movement driver can be located at the side of each cultivation line 28. One single driver can be located on different cultivation lines 28 in order to save investment costs. Different kind of drivers can be suitable for the present moving unit 4 and apparatus 1 using said moving unit 4, such an electric driver, i.e., static machinery composed by one or more electric motors, pulleys and/or coils and is preferably located at the end of a cultivation line 28, or a mechanical driver (connected with tractor Power Take Off , PTO), i.e., a movable machinery that takes mechanical power from the tractor. The machinery can be located on a trailer in order to set it on different cultivation lines 28. Also, the driver can be a standalone mechanical driver, i.e., a static machinery composed by one or more motor that take power from static generator.

In this way, the pruned branches 6 can be efficiently removed from the field and collected on filed side were upgrading operation (such as densification or chipping) can be done. During the periods when movement is not required, the driving motor can be removed from field. This improves the flexibility of the operation since the dead time (impossibility to operate) is reduced. As a matter of fact, this solution avoids contact between mechanical devices and soil so that the operations are decoupled (independent) from soil condition and humidity. The absence of contact between mechanical devices and soils can provide positive effect on soil quality since no soil compaction is consequent to tractors and machinery movement along the field.

The moving unit 4 and the apparatus 1 using said moving unit 4 can be coupled to, and decoupled from, the moving driver with the adoption of tensioning systems and junction points. As a matter of fact, the moving phase will take place only during specific season with the target of pruning removal. Consequently, during the rest of the year, no specific moving driver is required and the moving driver can be decoupled by the cultivation structure. Thanks to this disconnection solution the following main benefits can be obtained. The same moving driver can be used with one or more cultivation line 28 with a direct economic benefit for the farmer and the layout of the cultivation field is unchanged (compared to with traditional solution) during the periods of the year when the moving is not required.

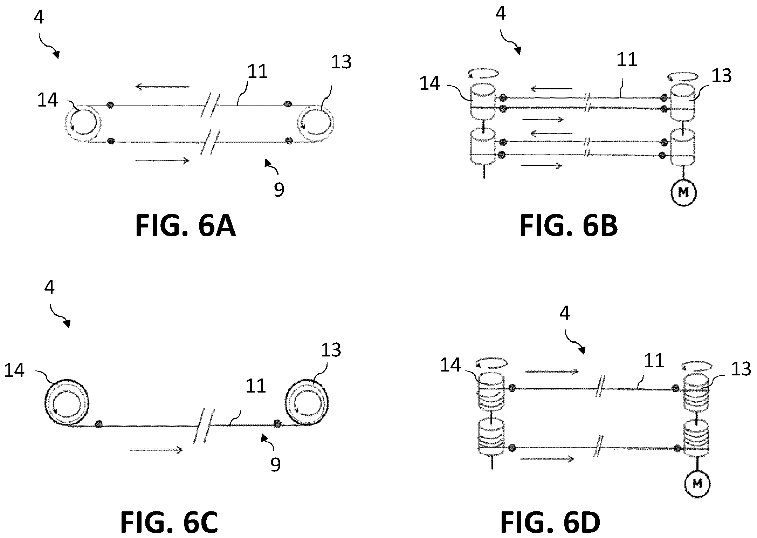

In one example, as shown in figures 6A and 6B, the transporting structure 9 can comprise at least a motorized pulley 13 and a passive pulley 14 and the wire-shaped element 11 can be at least in part winded around the motorized pulley 13 and/or the passive pulley 14 to form a double line structure movable in forwards and backwards direction between the motorized pulley 13 and the passive pulley 14. This solution, described as a top view in figure 6A and as a side view in figure 6B, consists of a circulation wire technique that can take place on a single cultivation line 28 or on a couple of consequent lines 28. The wire-shaped element 11 can be moved by a group of pulleys that allows the inversion of moving direction.

In another example, the transporting structure 9 can comprise at least a motorized pulley 13 and a passive pulley 14 and the wire-shaped element 11 can be at least in part winded around the motorized pulley 13 and/or the passive pulley 14 to form a single line structure, the motorized pulley 13 and the passive pulley 14 being configured to alternatively release and collect the wire-shaped structure 11 during the moving of the transporting structure 9. This solution, described as a top view in figure 6C and as a side view in figure 6D, can be mostly implemented on a single line structure 28 and is composed by a group of coils that alternatively release and collect the wire during the movement procedure.

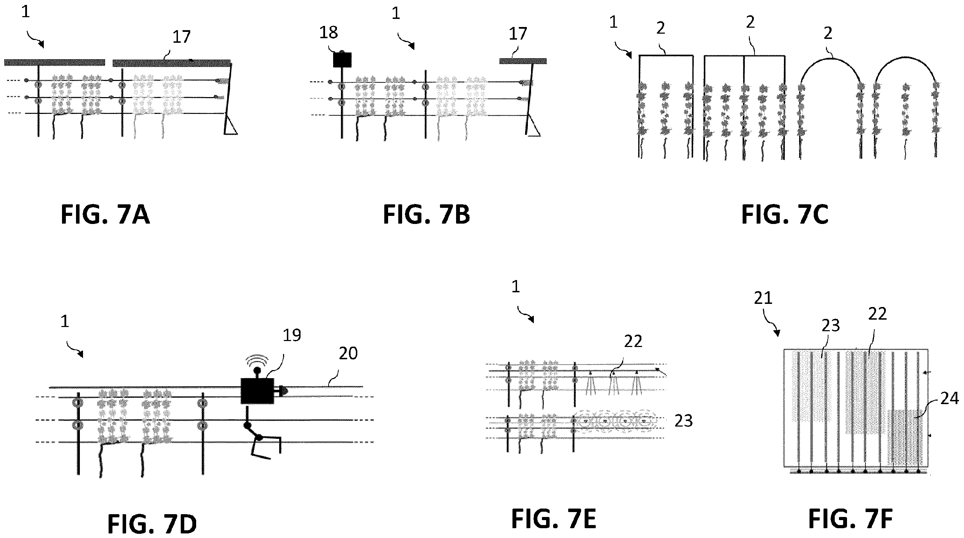

In examples, as shown in figure 7A, the apparatus 1 can further comprise an electric power system 17, in particular a photovoltaic system, fixable to at least one pillar 2. Also, as shown in figure 7B, the apparatus 1 can further comprise an on-field instrumentation 18 fixable to at least one pillar 2. The simultaneous use of the structure (pillars 2 and wirings 11) for movement and for integration of renewable energy harvesters and/or on-field instrumentation can minimize the overall costs and the environmental impact of the overall solution. Superior benefit can be obtained by design optimization of pillar structure and wirings for signalling transmission and electric power transmission. It is noted that the moving unit 4 and the apparatus 1 can operate with variable energy sources because the machineries are static. In particular, the solution is suitable to be coupled to carbon-free energy sources via electrification or batteries or other storage devices. More specifically technology like Agri-PV or Biomass gasification technology or Biogas from anaerobic digestion are perfectly in line with the present moving unit 4 or apparatus 1.

Generally, the cultivation fields are located in remote areas where no electric line is present. The absence of electric power source on field is often a major problem for electrical devices installation and application (such as on field instruments or automatic electric machineries). The solution according to the present disclosure takes advantage of the fixed structure to support photovoltaic devices (both Agri-PV or standard PV) in combination with electric storages (such as battery packages) helping to achieve the field electrification. Energy transmission lines can be easily integrated with the metal wiring installed along the support structure 8.

Many positive implications may follow the field electrification such as installation of advanced measurement devices to support precision farming methodologies (sun irradiation and air moisture sensors, soil analysing sensors, leaf analysing sensors, plant growing size analysing sensors, rain sensors and other optical sensors such as vigour analysers). Furthermore, electric agriculture machineries (such as electric tractors or electric load carriers) can take benefit of field electrification trough trolley-type electrical connection along the lines. Other implication can be the installation of corrosion protection device to protect metal elements of the supporting and movement structure along the field. Electrification can provide power source for wild animal control device installation such as electric guard line or sound emitters. Another example of the benefit of field electrification is the possibility of lights installation to enlighten the field during night operation (such as night harvesting operations).

The structure of the pillars 2 has the main target of guaranteeing a stable support for both the cultivation and the pruning movement. Different layouts can be developed and the optimal architecture can be obtained as a function of the cultivation methodology, the integration with renewable energy systems (such as Agri-PV or Standard PV) and the installation of robotic/service devices. In one example, the pillars 2 can have an arch-shaped structure, as shown in figure 7C.

In other examples the main pillar can be installed on each cultivation line 28 with a square-type structure or, alternatively, the main pillars can be installed just in some of the cultivation lines 28. In this latter case, the support for those lines without vertical pillars, can be derived from the main structure above the lines with hanging-type support structure. Same considerations might be done for the arch-type structure. The selection of the shape (square-type or arch type), the material (such as metal bars structure or metal wires structures or tensile structure) can be done accordingly with the type of machinery adopted on field and/or the presence of PV installation and/or others (in the examples as described above). The selection of the shape (square-type or arch type, single line pillars or multi-lines pillars) can also be derived from the cultivation density requirements. In fact, since the technology here presented can bring to advanced field operations without the need of tractor passage, the cultivation density might rich higher value thanks to the smaller space required between each cultivation line 28.

In addition, as shown in figure 7D, the apparatus 1 can comprise a rail structure 20 fixable to the pillars 2 and a robotic device 19 coupled to the rail structure 20 and movable relative to the ground G along said rail structure 20 in a direction orthogonal to the pillars 2. Support pillars 2 and wirings 11 can be integrated with an additional line 20 with the scope of movement of movable equipment such as robotic devices 19 or service devices. Robotic devices 19 are enabled of autonomous movement along the line 28 to increase the availability of sensing and mechanization. Similarly, the additional line 20, can provide a suitable solution for load carriage during operation into field (such, in example, harvest operation). Similarly to the example of figure 7B, autonomous electric device might be equipped with advanced sensing and measurement devices to support precision farming methodologies (irradiation and air moisture sensors, soil analysing sensors, leaf analysing sensors, plant growing size analysing sensors, rain sensors and other optical sensors such as vigour analysers. Movable robotic unit 19 may support in the example precision farming methodologies by detecting and controlling diseases penetration into the field, fruit maturation degree control and harvesting decision support, vegetative control and fertiliser utilization decision support, water presence analysis and control or automatic control of crop status and alerting in case of anomalies. Automatic electric devices in the example can be adopted for unmanned mechanization of filed such as autonomous pruning devices, autonomous harvesting devices, load carriers for operator support or automatic mechanical device (i.e., weeder) for weeding control in the rows or under the rows.

As shown in figure 7E and 7F, the apparatus can further comprise a precision spraying system 21 fixable to the pillars 2. In particular, the precision spraying system 21 can comprise at least a water irrigation unit 22, and/or a phytosanitary treatment unit 23, and/or a fertilization unit 24. The spraying system 21 can be controlled through a high precision agriculture controller in order to open/close selected nozzles to spray those nutrients or treatments in those areas of the field where are most needed with consequent saving of spraying materials and costs. In the example, the precision spraying system 21 can be alternatively installed with autonomous electric sprayers that can take maximum advantage of the supporting structure 8 and field electrification as described above. In order to support the precision spraying system 21, sensors might be installed along the field (such as moisture sensors and leaf sensors) together with remote controlled valves to obtain optimal precision for the irrigation devices.

In an additional example, the moving unit 4 can comprise protruding elements 15 arranged along the transporting structure 9 for facilitating the catching and transporting of branches 6 of the plants during the moving of the transporting structure 9. In particular, the protruding elements 15 are a plurality of static structures distributed equidistant from each other on the transporting structure 9. Alternatively or additionally, the protruding elements 15 can dynamic structures movable from a closed configuration to an open configuration, wherein in the open configuration the protruding elements 15 are configured to catch the branches 6 of the plants.

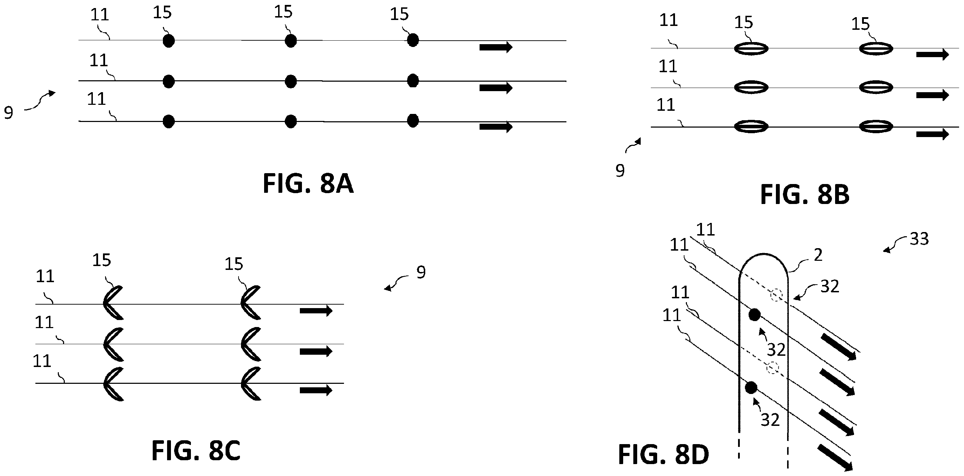

Figure 8A shows the plurality of protruding elements 15 configured as static structures. For example, the protruding elements 15 are solid spherical bodies arranged on the wire-shaped elements 11 of the transporting structure 9. In case the branches 6 attached to the wire-shaped elements 11 slip away and are not moved by the transporting structure 9, the protruding elements 15 can help to catch and transport the branches 6 of the plants that would be blocked by said protruding elements 15. In order to improve the catching effect, the protruding elements 15 can be configured as dynamic structures, as shown in figures 8B and 8C. Here, the protruding elements 15 are elliptical structures made of two halves that can be opened in order to increase the catching surface in the movement direction. Figure 8B illustrates the closed configuration of the protruding elements 15 whereas figure 8C illustrates the open configuration.

Alternatively, or in combination with the protruding elements 15, each wire shaped element 11 can be installed in a double line catching system 33, as shown in figure 8D. The twin lines system 33 is designed to contain between the first and second metal wire 11 the branches 6 and provide higher structure robustness and higher control of branches direction. The figure 8D also shows the junction points 32 between the wire 11 and the pillar 2.

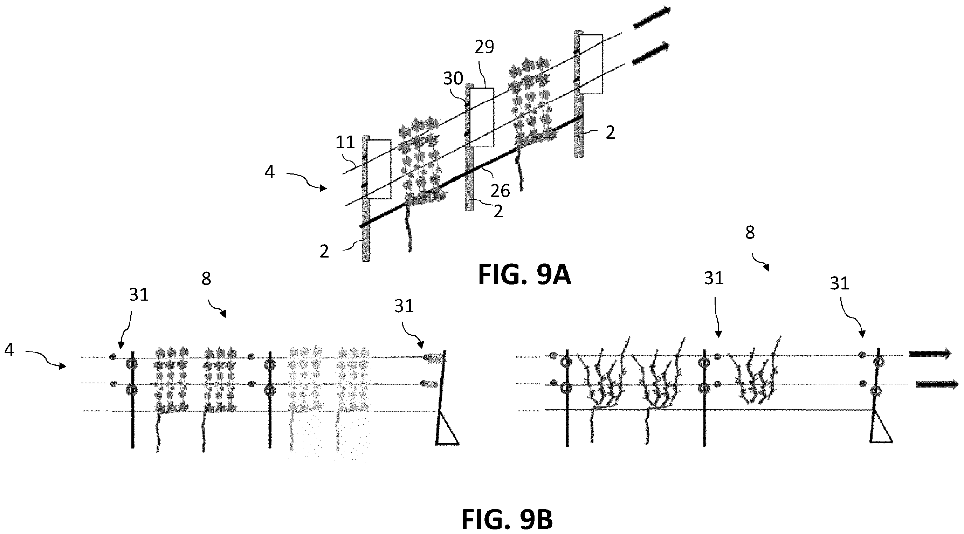

Figure 9A shows a possible retrofitting methodology to install a support device 29 for the moving unit 4 on existing pillars 2 along the field. In the example, the support device 29 can be connected with the pillars 2 through specific connections collars 30. The support device 29 is designed to provide load support for the movable wire-shaped elements 11 of the moving unit 4 and, during the movement phase, it is designed to guarantee correct movement of said movable wire-shaped elements 11. The support device 29 can be composed by pulleys or rubber type wheels to support load movement and cutting-edge structure or direction plates to help branches 6 movement along the line 11 and avoid branches 6 block in proximity of the pillars 2 (not shown in the figure).

As showed in figure 9B, the apparatus 1 and in detail the moving unit 4 in the example is composed by metal wiring 11 that are connected with a plurality of junction elements 31. The junction elements 31 can be eyelet-type connector or straight-type connectors and are used to joint two different sections of the wiring composing the moving unit 4. The junction elements 31 in the example can be used to detach the supporting structure 8 from a static pillar2 (static layout) and connect the structure 8 to the transporting device and structure (moving layout). The transporting device is described figures 5A to 5B while the transporting system is described in figures 6A to 6D.

Although a variety of techniques and examples of such techniques have been described herein, these are provided by way of example only and many variations and modifications on such examples will be apparent to the skilled person and fall within the spirit and scope of the present invention, which is defined by the appended claims and their equivalents.

### Reference Signs

- 1: Farming apparatus
- 2: Pillars
- 3: Fixed structure
- 4: Moving unit
- 5: Main body of the plant (trunk)
- 6: Branch
- 7: Collecting unit
- 8: Supporting structure
- 9: Transporting structure
- 10: Driving unit
- 11: Wire-shaped element
- 12: Pulley
- 13: Motorized pulley
- 14: Passive pulley
- 15: Protruding elements
- 16: Treatment unit
- 17: Electric power system
- 18: On-field instrumentation
- 19: Robotic device
- 20: Rail structure
- 21: Precision spraying system
- 22: Water irrigation unit
- 23: Phytosanitary treatment unit
- 24: Fertilization unit
- 25: Support element
- 26: Fixed wires
- 27: Connecting elements
- 28: Cultivation line
- 29: Support device
- 30: Connection collar
- 31: Junction element
- G: Ground

## Claims

1. Moving unit (4) couplable to a supporting structure (8) used for the cultivation of plants in a cultivating area, in particular for the cultivation of climbing plants, wherein the supporting structure (8) comprises a plurality of pillars (2) positionable on the ground (G) of said cultivating area and at least a fixed structure (3) fixable to at least a pillar (2) for supporting at least in part a main body (5) of the plants, the moving unit (4) comprising:
at least a transporting structure (9), on which branches (6) of the plants are attachable, the transporting structure (9) being movable relative to the supporting structure (8), in particular being configured to translate parallel to the ground (G), for transporting branches (6) of the plants from an originating point to a collecting point, when the branches (6) are cut from the main body (5).

2. Moving unit (4) according to claim 1, further comprising a driving unit (10) connectable to one end of the transporting structure (9) for a causing the movement of said transporting structure (9), wherein the driving unit (10) comprises:
a. at least an electric motor; and/or
b. at least a movable mechanical driver; and/or
c. at least a standalone mechanical driver.

3. Moving unit (4) according to any one of claims 1 to 2, wherein the transporting structure (9) comprises at least one wire-shaped element (11) extending parallel to the ground (G), wherein
a. the wire-shaped element (11) is attachable to, and detachable from, at least one of the plurality of pillars (2); and/or
b. the wire-shaped element (11) is attachable to, and detachable from, at least a support element (25) placeable on the ground (G) of the cultivating area.

4. Moving unit (4) according to any one of claims 1 to 3, further comprising at least one or more pulleys (12) coupled to the transporting structure (9).

5. Moving unit (4) according to any one of claims 3 to 4, wherein the transporting structure (9) comprises at least a motorized pulley (13) and a passive pulley (14) and wherein the wire-shaped element (11) is at least in part winded around the motorized pulley (13) and/or the passive pulley (14) to form a double line structure movable in forwards and backwards direction between the motorized pulley (13) and the passive pulley (14).

6. Moving unit (4) according to any one of claims 3 to 4, wherein the transporting structure (9) comprises at least a motorized pulley (13) and a passive pulley (14) and wherein the wire-shaped element (11) is at least in part winded around the motorized pulley (13) and/or the passive pulley (14) to form a single line structure, the motorized pulley (13) and the passive pulley (14) being configured to alternatively release and collect the wire-shaped structure (11) during the moving of the transporting structure (9).

7. Moving unit (4) according to any one of claims 1 to 6, further comprising protruding elements (15) arranged along the transporting structure (9) for facilitating the catching and transporting of branches (6) of the plants during the moving of the transporting structure (9), wherein in particular
a. the protruding elements (15) are a plurality of static structures distributed equidistant from each other on the transporting structure (9); and/or
b. the protruding elements (15) are dynamic structures movable from a closed configuration to an open configuration, wherein in the open configuration the protruding elements (15) are configured to catch the branches (6) of the plants.

8. Farming apparatus (1) for the cultivation of plants in a cultivating area, in particular for the cultivation of climbing plants, the apparatus (1) comprising:
a plurality of pillars (2) positionable on the ground (G) of said cultivating area;
a fixed structure (3) fixable to at least one pillar (2) for supporting at least in part a main body (5) of the plants; and
at least a moving unit (4) according to any one of claims 1 to 7, the moving unit (4) being movable relative to the fixed structure (3) and to said pillars (2), in particular being configured to translate parallel to the ground (G), for transporting branches (6) of the plants, when the branches (6) are cut from the main body (5).

9. Apparatus (1) according to claim 8, further comprising a collecting unit (7) for collecting the branches (6) transported by the moving unit (4).

10. Apparatus (1) according to any one of claims 8 to 9, further comprising a treatment unit (16) for separating the branches (6) transported by the moving unit (4) from the transporting structure (9).

11. Apparatus (1) according to any one of claims 8 to 10, wherein the pillars (2) have an arch-shaped structure.

12. Apparatus (1) according to any one of claims 8 to 11, further comprising
a. an electric power system (17), in particular a photovoltaic system, fixable to at least one pillar (2); and/or
b. an on-field instrumentation (18) fixable to at least one pillar (2).

13. Apparatus (1) according to any one of claims 8 to 12, further comprising a rail structure (20) fixable to the pillars (2) and a robotic device (19) coupled to the rail structure (20) and movable relative to the ground (G) along said rail structure (20) in a direction orthogonal to the pillars (2).

14. Apparatus (1) according to any one of claims 8 to 13, further comprising a precision spraying system (21) fixable to the pillars (2), wherein in particular the precision spraying system (21) comprises at least:
a. a water irrigation unit (22); and/or
b. a phytosanitary treatment unit (23); and/or
c. a fertilization unit (24).

15. Method for retrofitting a supporting structure (8) used for the cultivation of plants in a cultivating area, in particular for the cultivation of climbing plants, wherein the supporting structure (8) comprises a plurality of pillars (2) positionable on the ground (G) of said cultivating area and at least a fixed structure (3) fixable to at least a pillar (2) for supporting at least in part a main body (5) of the plants, the method comprising:
providing the moving unit (4) according to any one of claims 1 to 7; and
coupling said moving unit (4) to the supporting structure (8) such that the transporting structure (9) is movable relative to the supporting structure (8), in particular is configured to translate parallel to the ground (G), for transporting branches (6) of the plants from an originating point to a collecting point, when the branches (6) are cut from the main body (5).
